# EUROPEAN PATENT SPECIFICATION

(11) **EP 0 766 365 B1**
(45) Date of publication and mention of the grant of the patent: **11.11.1998**
(21) Application number: 95115174.5
(22) Date of filing: 27.09.1995
(51) Int. Cl.: H02J 7/10, H02J 9/06

(54) **Electronic equipment with intelligent battery**
Elektronische Einrichtung mit einer intelligenten Batterie
Equipement électronique avec batterie intelligente

(43) Date of publication of application: 02.04.1997
(73) Proprietor: Hagenuk Telecom GmbH, 24118 Kiel (DE)
(72) Inventor: Thorsöe, Jan, DK-9230 Svenstrup J (DK)
(74) Representative: Hansmann, Dierk, Dipl.-Ing.

(56) References cited:
- EP-A- 0 545 633
- EP-A- 0 623 985
- WO-A-93/19508
- US-A- 5 254 928
- US-A- 5 304 916

## Description

The invention concerns an electronic equipment containing a microprocessor, memory, a battery pack and a connection to a controllable power supply, the microprocessor containing at least one charging control routine and the battery including nonvolatile memory with parameters for controlling the power supply.

For charging the battery or battery pack by a power supply a voltage is applied to the battery. When using different battery types (NiCd - nickelcadmium, NiMH - nickel metal hydride, LIB - lithium ion battery) with different capacities the charging may not reach the optimum for each type. Instead different types of batteries should be charged according to individual charging schemes in order to gain optimum capacity and to secure longterm battery operation. Even when always using the same battery type, for optimum performance it may be necessary to control charging e.g. when the charging is interrupted. After replacing the battery into the charging device it is state of the art to restart a new complete charging operation. This may deteriorate the batteries capacity.

US-PS 5.254.928 discloses a power management system for battery powered computers. The system can determine which one of a plurality of battery packs has been coupled to the system. The system recalls from storage the recommended charging pattern for the particular battery pack and charges the same at the recommended rate.

WO 93/19508 discloses a power supply and battery charging system for supplying power to an electrical device and / or to a battery for charging. The system comprises a power controller, whereby, regardless of the rate of charge of the battery, a constant current is maintained for charging the battery while the voltage across the device and the battery is allowed to vary.

It is the object of the invention to provide an electronic equipment according to the opening paragraph which overcomes the above mentioned disadvantages.

This object is solved according to claim 1 with an electronic equipment containing a microprocessor, memory, a battery pack and a connection to a controllable power supply, the microprocessor containing at least one charging control routine and the battery including nonvolatile memory with parameters for controlling the power supply, characterized in that the electronic equipment is a mobile telephone having an off mode, a stand-by mode and a supply mode, and in that in the off and stand-by modes the telephone current of the mobile telephone is measured and the power supply is controlled to hold the charge current constant.

The parameters stored in the nonvolatile memory included in the battery pack contains e. g. information concerning the battery type, the capacity, the criteria for termination of the charging. This information can be read by the microprocessor which controls the charging via the analog controllable power supply.

Thus batteries are always handled in an optimal way, even when the customers use batterypacks of different type and capacity. This insures a long lifetime and a high performance of the battery. Even future battery types can be recharged in an optimal way by implementing appropriate parameters in the batterypack's memory.

The electronic equipment is a mobile phone, especially a handheld or a cordless phone. In this case the phones microprocessor may be used and the phone can be connected to the analog controllable power supply preferable by a cable or by pin plug connectors or by appropriate contacts.

The microprocessor controls the power supply to apply appropriate charging current, depending on the type of battery. Additionally under control of the microprocessor the charging is terminated according to the parameters stored in the battery's non-volatile memory. E. g. for NiCd or NiMH a voltage slope and temperature slope are used as terminating criteria. For safety precautions additional terminating criteria may be applied like e. g. a maximum voltage or a maximum temperature and a minimum temperature or a maximum charging time. All this and further parameters are stored in the non-volatile memory included in the batterypack.

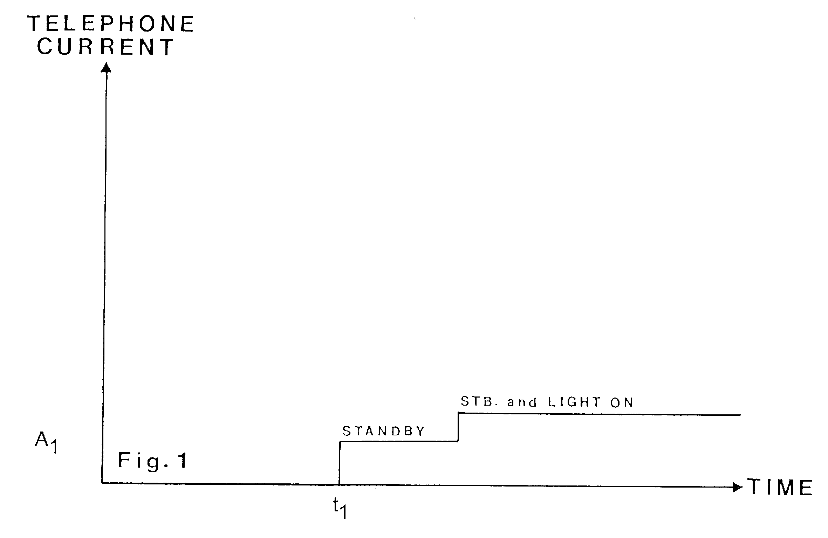

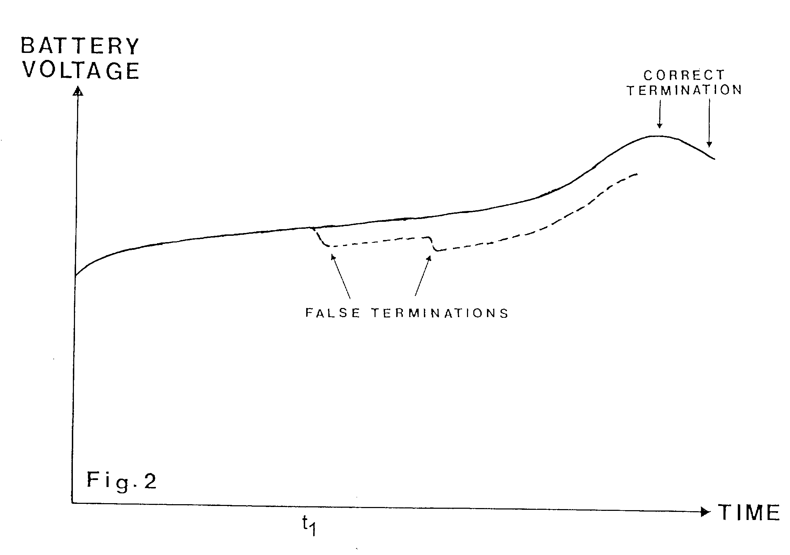

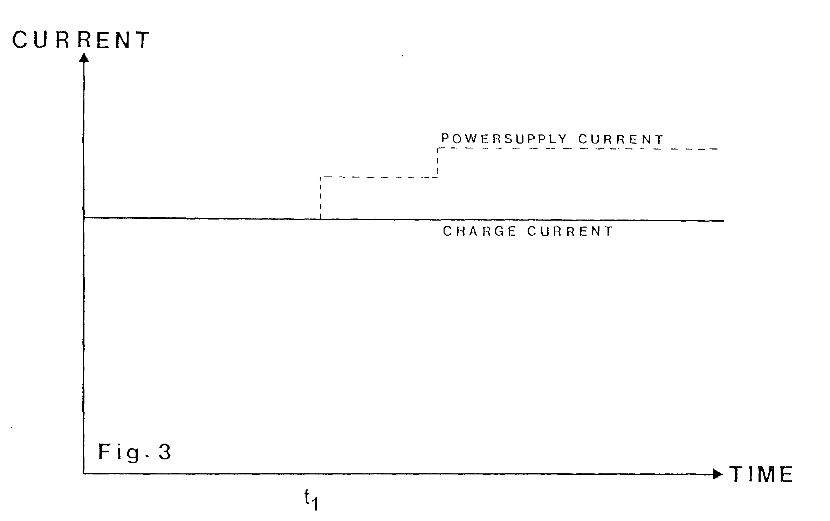

Especially for mobile or cordless phones, using the internal microprocessor, the invention is extremely useful as charging can be done also in the standby mode. As shown in fig. 1, switching the telephone from off to standby at time t index 1 results in a certain power consumption A index 1 for the standby (STB) mode. This would normally result in a decline of battery voltage as shown in fig. 2 (dashed line) and cause termination of charging. To avoid this, the current consumed by the telephone is measured continuously and the power supply is controlled to hold the charging current constant as shown in fig. 3. During charging also the resting voltage is measured. The resting voltage is the voltage of the battery for stable capacity (no current flow in the battery). The resting voltage is stored and updated in the microprocessor. When the phone is to be operated by switching to a supply mode, the charging will be interrupted since the phone for operation needs most of the current delivered by the power supply. The charging shall then be continued from the point where it was stopped as soon as the telephone is returned to standby mode. During operation the current from the power supply is controlled to keep the voltage of the battery equal to the resting voltage. Thus in the supply mode the power supply gives the necessary energy to the phone. Therefore the customer does not have to disconnect the charging during use in standby or conversation mode. While connected to e. g. a netadapter, a cigarette plug charger or a comfort car kit (all controllable), the customer can use the phone for an unlimited time, even when the battery is completely empty.

As the charging is controlled by the microprocessor no undesirable charge termination or damage will take place. The battery lifetime will be increased.

## Claims

1. Electronic equipment containing a microprocessor, a memory, a battery pack and a connection to a controllable power supply, the microprocessor containing at least one charging control routine and the battery including nonvolatile memory with parameters for controlling the power supply, characterized in that the electronic equipment is a mobile telephone having an off mode, a stand-by mode and a supply mode, and in that in the off and stand-by modes the telephone current of the mobile telephone is measured and the power supply is controlled to hold the charge current constant.

2. Electronic equipment according to claim 1, characterized in that the resting voltage of the battery, at which no current flows in the battery, is measured, stored and continuously updated in the microprocessor and in that during charging, if the mobile telephone is operated by switching to the supply mode, the current from the power supply is controlled to keep the voltage of the battery equal to the resting voltage.

## Patentansprüche

1. Elektronische Einrichtung mit einem Mikroprozessor, einem Speicher, einer Batterieeinheit und einer Verbindung zu einer steuerbaren Leistungsversorgung, wobei der Mikroprozessor mindestens ein Ladungs-Steuerprogramm und die Batterie einen nichtflüchtigen Speicher mit Parametern zum Steuern der Leistungsversorgung aufweist, dadurch gekennzeichnet, daß die elektronische Einrichtung ein Mobiltelefon ist, das eine Betriebsart "Aus", eine Betriebsart "Bereitschaft" und eine Betriebsart "Versorgung" aufweist, und daß in den Betriebsarten "Aus" und "Bereitschaft" der Telefonstrom des Mobiltelefons gemessen und die Leistungsversorgung so gesteuert wird, daß der Ladungsstrom konstant bleibt.

2. Elektronische Einrichtung nach Anspruch 1, dadurch gekennzeichnet, daß die Ruhespannung der Batterie, bei der kein Strom in die Batterie fließt, gemessen, gespeichert, und kontinuierlich in dem Mikroprozessor aktualisiert wird, und daß während des Ladens in dem Fall, in dem das Mobiltelefon durch Schalten in die Betriebsart "Versorgung" betrieben wird, der Strom aus der Leistungsversorgung so gesteuert wird, daß die Spannung der Batterie auf gleichem Wert wie die Ruhespannung bleibt.

## Revendications

1. Equipement électronique comprenant un microprocesseur, une mémoire, une unité de batterie et une connexion à un dispositif d'alimentation réglable, le microprocesseur contenant au moins une routine de contrôle de charge de la batterie et la batterie comportant une mémoire non volatile avec des paramètres pour régler le dispositif d'alimentation, caractérisé en ce que l'équipement électronique est un téléphone mobile présentant un mode éteint, un mode d'attente et un mode de fonctionnement, et en ce que dans les modes éteint et d'attente le courant de téléphone du téléphone mobile est mesuré et l'alimentation est réglée pour maintenir constant le courant de charge.

2. Equipement électronique selon la revendication 1 caractérisé en ce que la tension au repos, à laquelle aucun courant ne parcoure la batterie, est mesurée, stockée et continuellement mise à jour dans le microprocesseur et en ce que durant la charge, si le téléphone mobile est activé par commutation vers le mode de fonctionnement, le courant provenant du dispositif d'alimentation est réglé de façon à garder la tension de la batterie égale à la tension au repos.
